# EUROPEAN PATENT SPECIFICATION

(11) **EP 3 295 263 B1**
(45) Date of publication and mention of the grant of the patent: **23.08.2023**
(21) Application number: 15723205.9
(22) Date of filing: 12.05.2015
(51) Int. Cl.: G05B 19/042, B66B 1/34, G06F 9/445

(54) **METHOD TO UPDATE SAFETY RELATED SOFTWARE**
VERFAHREN ZUR AKTUALISIERUNG EINER SICHERHEITSBEZOGENEN SOFTWARE
PROCÉDÉ DE MISE À JOUR D'UN LOGICIEL LIÉ À LA SÉCURITÉ

(43) Date of publication of application: 21.03.2018
(73) Proprietor: Otis Elevator Company, Farmington CT 06032 (US)
(72) Inventor: KIRCHHOFF, Frank, 13507 Berlin (DE); HNIDA, Martin Georg Walter, 13507 Berlin (DE); WILKE, Michael, 13507 Berlin (DE); LORENZ, Hermann Ludwig, 13507 Berlin (DE); HERKEL, Peter, 13507 Berlin (DE)
(74) Representative: Schmitt-Nilson Schraud Waibel Wohlfrom Patentanwälte Partnerschaft mbB
(86) International application number: PCT/EP2015/060475
(87) International publication number: WO 2016/180484

(56) References cited:
- US-A1- 2008 062 981
- US-A1- 2009 049 441
- US-A1- 2009 313 481
- US-A1- 2011 247 901
- US-A1- 2014 096 126
- US-A1- 2014 282 458

## Description

The present invention relates to a method of updating safety-related software in a people conveyor system, particularly in an elevator system. The present invention also relates to a people conveyor system, particularly an elevator system, comprising a controller for controlling operation of the people conveyor system, the controller configured to carry such method of updating safety-related software.

People conveyor systems are subject to particular safety requirements. Therefore, hardware or software used to control operation of people conveyors is to a significant part subject to specific conditions in order to meet such safety requirements. Different levels of safety integrity requirements exist, depending on the degree of safety relevance of the respective functions or operations of the people conveyor system controlled. For a general overview of these safety requirements, reference is made to international standards IEC 61508-1 through IEC 61508-3.

Elevator systems are a particular example of a people conveyor system. A further example would be escalators or moving walkways. In the following, the invention will be described using an elevator system as an exemplary embodiment for a people conveyor system, it being understood that corresponding considerations apply with respect to an escalator or moving walkway as well.

In people conveyor systems safety critical operations are controlled, or at least monitored, using sensor and/or switching devices (in the following simply referred to as safety switches) connected to a safety controller (in the following also referred to as a safety unit). Safety switches are often used at the various "safety points", at which the state of safety critical components (e.g. the position of movable components, such as doors) must be monitored prior to the initiation of an action and, if necessary, during the course of this action. In typical configurations a number of these safety switches are, in particular, connected in series to form a so-called "safety chain" so that the action can only be started or continued when all the safety switches or, in more general terms, switching devices take up a pre determined switching state. For example, in the case of an elevator system it must be ensured that before the start and during the travel of the elevator car all doors (car doors as well as landing doors on each floor) remain closed and mechanically locked. Therefore, travel of an elevator car is in general not allowed unless all of the safety switches in a safety chain connecting respective safety switches monitoring the closing state of the doors are closed.

Conventionally, mechanic or magneto-mechanic switching devices have been used as the safety switches in a safety chain. Nowadays, electronic or electromagnetic switching or sensor devices are used in a safety chain, e.g. of the type described in US 5 487 448 or EP 0 535 205 B1. Such electronic or electro-magnetic switching or sensor devices can be actuated without contact, for example by moving a magnet closer or farther away thereby inducing or not inducing a voltage. With these type of switching or sensor devices, the switch point is generally easier to set and also remains stable during longer operating periods. Moreover, the causes of stoppages which are attributable in mechanical switches to a wear and tear of the contact pieces and other movable components are no longer applicable. However, it is important for this type of switching or sensor device to test for faultless functioning and, moreover, to be able to ascertain as simply as possible in the case of a breakdown which switch in a safety chain has led to a functional error and interrupted the chain. Unlike mechanical switches, the switching state of electronic switching or sensor devices cannot be ascertained optically, as is the case in typical mechanical safety switches. Therefore, typically electronic, non-contact, and testable switching or sensor devices have a sensor and control electronics for detecting the state of the switch/sensor and altering this state for test purposes. Operation and monitoring correct operation of such electronic sensor/switching devices is realized by means of specific control procedures and test procedures.

Nowadays a safety-unit as described herein typically involves software to control its operation and to monitor correct functioning of the unit and the safety switches connected. Specific test protocols have been developed for testing faultless functioning of the safety switches used in the safety chain of a people conveyor. The procedures determining when and how to carry out such test protocols, and how to evaluate the results of the test protocols are controlled by specific safety-related software residing in a safety unit to which the switches of of the safety chain are connected and which controls operation and status of the safety chain. Such software is certified to perform specific safety-related functions. Programming of such safety-related software requires extreme care, e.g. typically any functions provided need to provide redundancy.

There is a requirement to update such safety-related software in a people conveyor system from time to time. Care needs to be taken when updating such safety-related software. Therefore, until today it is the state of the art in the field of people conveyors to update safety-related control or monitoring procedures by replacing the corresponding hardware on which these procedures are implemented. This applies even in case these procedures are purely implemented by software, i.e. an update could be realized by way of a mere software update and would in principle not require any changes in the hardware.

Less severe restrictions apply with respect to non-safety critical software updates. E.g. US 2008/0062981 A1 describes a method for modernizing the control of destination dispatch floor terminals in an elevator system via a near-field radio connection that is established when a mobile data storage terminal containing the software update is brought into close proximity of less than about 30 cm to a respective destination dispatch terminal. Once the near field radio communication is established, the software update is transmitted from the mobile data storage terminal to the destination dispatch terminal. Once the mobile terminal is brought out of the near-field range, communication terminates automatically thereby ensuring that no other terminals are affected by the software update.

US 2014/282458 A1 discloses systems and methods for provisioning building equipment. A provisioning system includes a main control unit having a processing circuit, a memory device, and a data communications interface. The provisioning system further includes an auxiliary control unit and a portable data storage device. The portable data storage device is physically separate from the main control unit and has an update file stored therein. The update file includes a plurality of partitions, each partition including provisioning data and metadata. The main control unit identifies a first partition of the update file containing first provisioning data for the main control unit and a second partition of the update file containing second provisioning data for the auxiliary control unit.; The processing circuit is configured to extract the provisioning data from the identified partitions and to apply the extracted provisioning data to the main control unit and the auxiliary control unit.

US 2009/049441 A1 discloses a remote update system for an elevator control program, which is capable of sequentially realizing update of control programs of a plurality of elevators with reduced communication time and costs without stopping the plurality of elevators at the same time. A server delivers to a representative elevator update data including differential information between the control program of a version before update and the control program of the latest version to be updated to through a communication line, and the representative elevator and other elevators tsequentially transfer the update data according to a predetermined transfer order, and update their own control programs based on the update data including the differential data.

It would be beneficial to allow a technician to update safety-related software in a people conveyor system, particularly in an elevator system, without having to replace hardware.

Embodiments described herein provide a method of updating safety-related software in a people conveyor system, particularly in an elevator system, according to independent claim 1.

Further embodiments relate to a people conveyor system, particularly an elevator system, comprising a controller for controlling operation of the people conveyor system, the controller including at least one safety unit configured to control safety-related functions of the people conveyor system, the safety unit configured to carry out the method of updating safety-related software described herein.

Further embodiments relate to a system comprising at least one software update server and at least one people conveyor system as described herein. The software server is configured to provide a safety-related software update for the people conveyor system. The people conveyor system is configured to receive the safety-related software update from the software update server via a data network.

The invention will be described in more detail by way of an exemplary embodiment as shown in the figures.
Figure 1 shows an elevator system according to an embodiment;
Figure 2 shows a schematic diagram of a system including an elevator control system comprising a safety unit according to an embodiment and a central server system in communication with the elevator control system;
Figure 3 shows a flow diagram of a method of updating safety-related software in the embodiment shown in Figure 2.

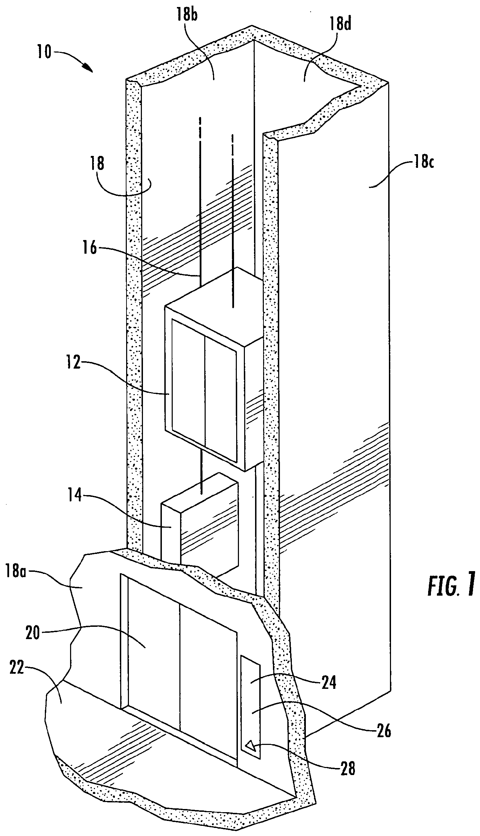

Figure 1 shows an elevator system 10 according to an embodiment in a schematic and simplified perspective view. Elevator system 10 comprises a car 12 and a counterweight 14 connected by a tension member 16 in the configuration of a rope or belt (tension member 16 is only indicated schematically in Figure 1). Tension member 16 is driven by a an elevator drive, e.g. a traction drive, which is not shown in Figure 1, such as to move car 12 and counterweight 14 along a hoistway 18. Although the top part of the hoistway 18 is not shown in Figure 1, the elevator drive is located in the top part of the hoistway above the highest landing. Elevator car 12 and counterweight 14 move along guide rails which are also not shown in Figure 1. Hoistway 18 has an essentially rectangular cross section and is surrounded by four vertically extending side walls three of which (left side wall 18b, right side wall 18c, back wall 18d) are shown in Figure 1. The front wall of the hoistway is omitted in Figure 1 to show the car and counterweight. Only at the lowest landing 22 a portion of front wall 18a is visible with a landing door 20 being formed in front wall 18a. Not shown is a hall operating panel for entering hall calls. Front wall 18a will have a similar configuration at other landings.

Different from the other landings, at the lowest landing 22 a control board 24 is provided in the front wall 18a of the hoistway 18. The control board 24 is used for activating a software update operation mode by operating a software update activation switch, as described in further detail below. Control board 24 is closed by a front panel 26 which is itself locked by a key lock 28. Key lock 28 can be opened by inserting a suitable key, e.g. a triangular key, into the key hole of key lock 28. Once front panel 26 is opened, software update activation switch of control board 24 will be accessible (the software update activation switch is not shown in Figure 1). Alternative to the embodiment shown in Figure 1, the control board 24 may be located at any landing or in the vicinity of the elevator 10 in other embodiments. It is not required to place the control board 24 at the lowest landing. Even more than one control board 24 might be provided, although typically one control board 24 will be sufficient to provide for software updates in a safer manner.

In some embodiments, the control board 24 may be a separate control board providing the function of activating the software update operation mode exclusively. In other embodiments, the software update activation switch may be included in a control board 24 used for providing other functions. In one example, as shown in Figures 1 to 3, the control board 24 is used for activation of emergency electrical operation of the elevator and includes an emergency electrical operation switch. Operation of the electrical operation emergency switch permits controlling movement of the elevator car 12 manually by operating respective manual operation switches or buttons provided on the control board 24. In normal operation, the control board 24 is inactive.

As indicated in the embodiment shown in Figures 1 to 3, the attendance of the service person needs to be ensured when activating the software update operation mode. This is achieved by requiring a sequence of manual interventions, including at least the operation of one software update activation switch on the control board 24. Once the software update operation mode is activated, the safety unit 60 will look for software updates being available in a first, inactive memory of a safety unit 60 of an elevator control system 50 when the safety unit is starting up after a boot or reboot command, as described in detail below.

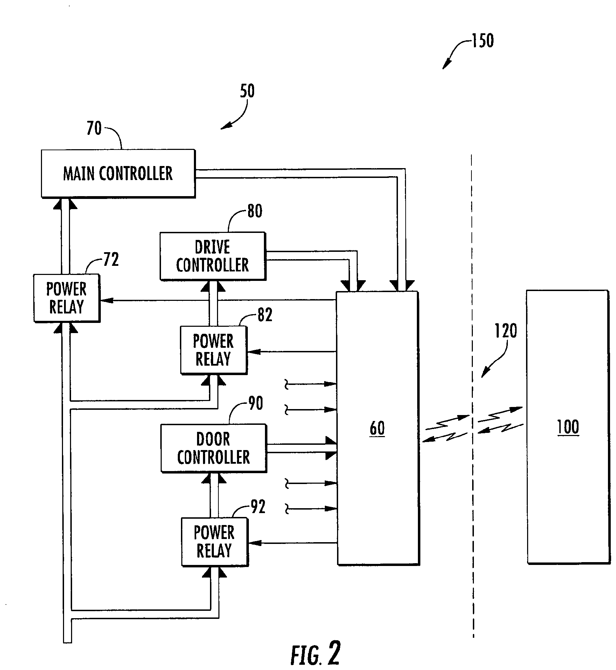

Figure 2 shows a schematic diagram of a system 150 including an elevator control system 50 comprising a safety unit 60 according to an embodiment of the invention and a central server system 100 in communication with the elevator control system 50. The elevator control system 50 comprises a main controller 70 for controlling overall operation of elevator functions, e.g. control of service requests, illumination of car and floors, emergency calls, general elevator safety functions, etc.. Main controller 70 is provided with information from various safety switches provided in the elevator car 12 and the hoistway 16, e.g. car position sensors indicating the position of the car in the hoistway, landing door position sensors indicating the closing state of landing doors, and others. Main controller 70 is provided with electric energy via a power relay 72. Elevator control system 50 further comprises a drive controller 80 for controlling the drive machine driving the elevator car 12 as well as the brakes stopping or preventing movement of the car. Drive controller 80 is provided with electrical energy via a power relay 82. Elevator control system 50 further comprises a door controller 90 for controlling the door drive of the elevator car 12 driving the doors of the elevator car 12 such as to open and close the car doors and landing doors when the car 12 stops at a landing. Car doors are operated directly by the door drive while the respective landing doors are operated indirectly via movement of the car doors when the car doors open or close at a landing. Door controller 90 is also provided with a signal from a car door safety switch indicating the closing state of the car door. Door controller 90 is provided with electrical energy via a power relay 92.

Main controller 70, drive controller 80, and door controller 90 each are in communication with safety unit 60. Information on the state of any of the safety switches assigned to main controller 70, drive controller 80, and door controller 90, respectively, is communicated to safety unit 60 via the respective data connections. Safety unit 60 may also actuate any safety actuators controlled by main controller 70, drive controller 80, or door controller 90. Usually, a bus system is used for these purposes. A popular bus system includes a serial field bus system, e.g. a CAN bus system. Safety unit 60 realizes an electric safety chain, as described in detail herein. In that respect, safety unit 60 receives status information from any of the safety switches connected to the main controller 70, drive controller 80, and door controller 90, respectively. Safety unit 60 evaluates this information in the configuration of a safety chain. Usually, the safety unit 60 controls a plurality of safety chains relevant with respect to different subsystems of the elevator system, respectively (e.g. a safety chain with respect to the main power supply of the elevator system, a safety chain with respect to the drive of a car, or a safety chain with respect to the door drive of a car, etc.). A safety chain has the configuration of a serial connection of all relevant safety switches. In case only a single one of the safety switches in the safety chain does not show a proper status information (e.g. indicates a not fully closed state of a door), the status of that safety switch will be considered open. Due to the serial connection of the safety switches in the safety chain, any safety chain including that safety switch will be considered open indicating that the elevator system, or a respective subsystem of the elevator system (e.g. the car door drive), is considered to be in an unsafe condition. In such case, safety unit 60 will stop further operation of the elevator system, or of the respective elevator subsystem, until the safety chain is closed again. Particularly, safety unit 60 may interrupt power supply to the relevant controller for the elevator subsystem. For example, safety unit 60 may interrupt power supply to the drive controller 80, in order to stop further movement of the car, safety unit 60 may interrupt power supply to the door controller 90 to stop further movement of the car door, and/or safety unit 60 may interrupt power supply to the main controller 70 to completely shut down the elevator system.

Operation of the safety unit 60 is controlled by a control software. The control software defines the individual safety chains or safety circuits monitored by safety unit 60. The control software also provides for specific test procedures for checking the correct operation of each of the safety switches in the safety chains. These test procedures are carried out regularly on the initiative of safety unit 60. Control and test procedures for safety unit 60 are programmed by the manufacturer of the elevator system and provided to safety unit 60 upon installation. Control and test procedures for the safety unit 60 are updated from time to time. These software updates are also programmed by the manufacturer of the elevator system and are provided by a central server unit 100 of the manufacturer. Central server unit 100 resides outside the elevator control system 50 of the single elevator systems in operation, e.g. in a research and development facility of the manufacturer of the elevator system 10. However, central server unit 100 is in data communication with the elevator control system 50. E.g. in the embodiment shown in Figure 2, the safety unit 60 is connected to the central server unit 100 via a public data network 120, e.g. the internet. Any updates of software, including safety-related software residing in the safety unit 60, but also in any other relevant controller 70, 80, 90, are provided in a centralized manner by the central server unit 100 to each of the elevator control systems 50. Particularly, the control systems 50 of each of these elevator control systems 50 regularly receive such software updates from the central server unit 100, either by way of a push mechanism installed in the server unit 100 (i.e. the server unit 100 regularly sends packages with software updates to the elevator control systems 50), or by a regularly executed inquiry for software updates initiated by the elevator control systems 50 to the central server unit 100. In case new software updates are available on the server unit 100, these updates are downloaded to the respective elevator control systems 50. However, at least in case the software updates relate to safety-related procedures, such software updates are not activated immediately after the download has been completed. Rather, the downloaded software update is stored in an "inactive" memory section of the respective elevator control system 50 (e.g. in an "inactive" memory section of safety unit 60) that is not used for executing control of elevator operations. A specific activation procedure is required for putting the software update into service, as described below.

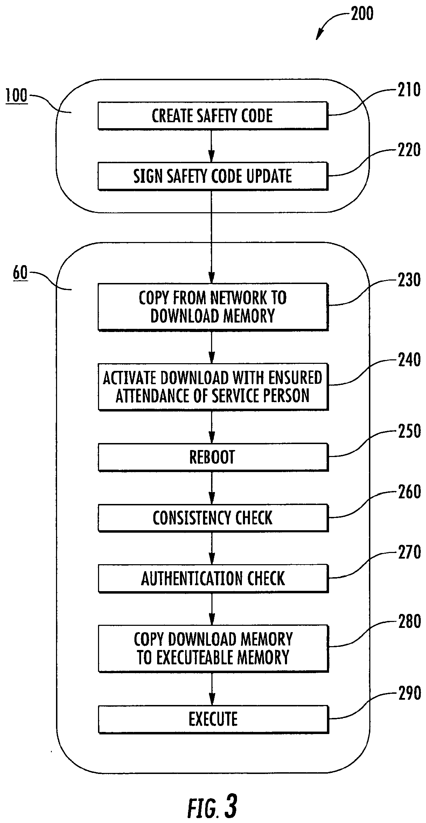

Figure 3 shows a flow diagram of a method 200 of updating safety-related software in a system as shown in Figure 2. An updated version of safety-related software to be implemented in a safety unit 60 of an elevator control system 50 of the configuration shown in Figure 2 is prepared by the manufacturer of the elevator system (step 210) and provided on server computer 100 as an update software package for download by respective elevator control systems 50. Before being released for download, the software update package is provided with a digital signature (step 220) such that it can be verified by the receiver of the software update package (elevator control system 50, particularly safety unit 60) after download and before activation of the software update package that the software update package was created by the manufacturer and was released for download by the manufacturer.

In step 230, the digitally signed software update package is downloaded and stored by the recipient, i.e. the control system 50 (safety unit 60) of an elevator system 10 installed in a building, in a first memory section, also referred to as a DownloadMemory. Usually, in case of safety-related software, the downloaded software update package will be received and stored by the safety unit 60 of that control system, but other configurations are conceivable where the downloaded software update package is temporarily stored at some other location until it is activated. In most cases, the download will simply involve a copying of the software update package into the DownloadMemory without any modification to it, but it might be conceivable to apply some data transformations to the software update package for purposes of transmission (e.g. applying packing algorithms, encryption algorithms, and the like) as principally known in the art. Usually, the downloaded software update package will be stored in the DownloadMemory in essentially the same form as it has been provided by the server 100, i.e. without having been compiled or otherwise transformed, and with the digital signature applied to it. In case the software update package has been provided in the form of an executable program code, the software update package will be principally readily executable in the form it is stored in the DownloadMemory of the elevator control system 50. However, the DownloadMemory will be an "inactive" memory section not used by the control system 50 when running its programs and procedures for controlling operation of the elevator system 10. Rather, control system 50 will be programmed to access the DownloadMemory only in case specific instructions exist that part of the control software should be updated. Typically, such software update procedure will be carried out after a reboot of the control system 50, given that (i) a not yet installed software update package resides in the DownloadMemory and (ii) at least in case the software update package relates to safety-related software, an activation of that software update package (as described below) has been completed successfully.

Whether the download of the software update package will be done online, e.g. via a data communication network, or via a traditional software update mechanism (providing a data carrier, or the like), storing the software update package in an inactive memory section of the elevator control system 50 ensures that the software update package is not yet executed as long as it resides in the DownloadMemory exclusively.

Once activation is accomplished, the software update package will be executed by the elevator control system 50. However, activation requires the attendance of a service person, as described in the following.

Activation of the software update package residing in the DownloadMemory is described as the next step 240 following the downloading step 230 in Figure 3. Activation may be carried out by any procedure which makes sure that a service person is attendant at the elevator system at the time of activation of the software update package. This step is considered important, because it is necessary that a service person attends the elevator system when updating safety-related software, in order to bring the elevator system into a safe condition before the updating procedure is started and also ensure that the elevator system remains in such safe condition until the update procedure is completed successfully and it has been verified that the elevator control system 50 operates correctly after the update. Several possibilities of providing a safe activation of a safety-related software update package do exist, as described herein. According to the present invention, the software update package is downloaded into an inactive memory section in step 230, and is transferred into an active memory section only after the activation step 240 has been successfully completed.

The attendance of the service person during the activation procedure in step 240 is ensured by requiring a combination of operating a manual software update activation switch fixedly associated with the elevator system and additionally carrying out a predefined software update activation sequence. The manual software update activation switch may be included in the control board 24, either as an additional switch on that control board, or by assigning to operation of any of the switches on that control board (or to operation of any combination of these switches) the additional function of activating an update of safety-related software. The predefined software update activation sequence involves inputs to be provided by the service person to the elevator control system 50 (particularly, to the safety unit 60) via a service tool. The predefined software activation sequence is interactive so that the elevator control system 50 gives specific information to the service person regarding available software update packages residing in the DownloadMemory and regarding specifics of the control procedures to be updated by such software update packages, and requests the service person to confirm that the software update is to be effected.

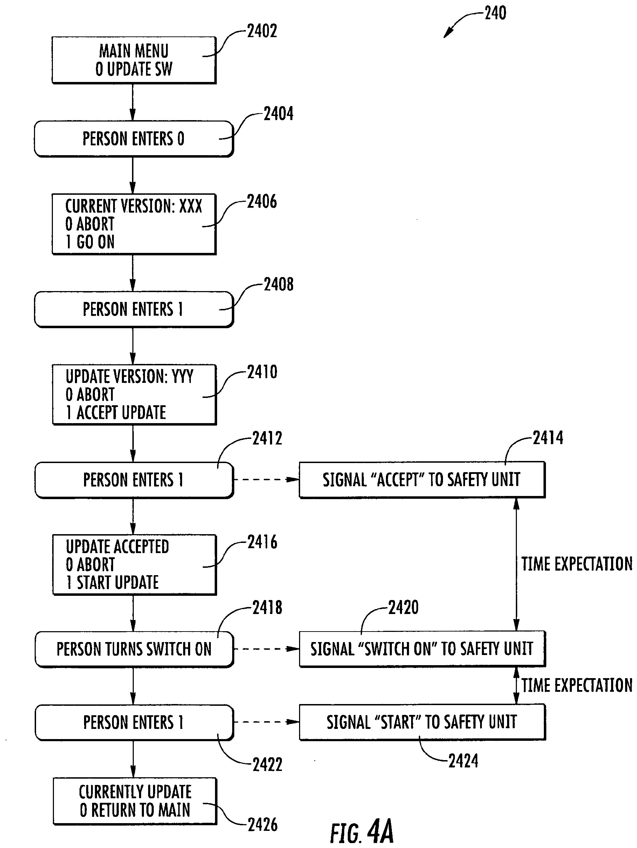

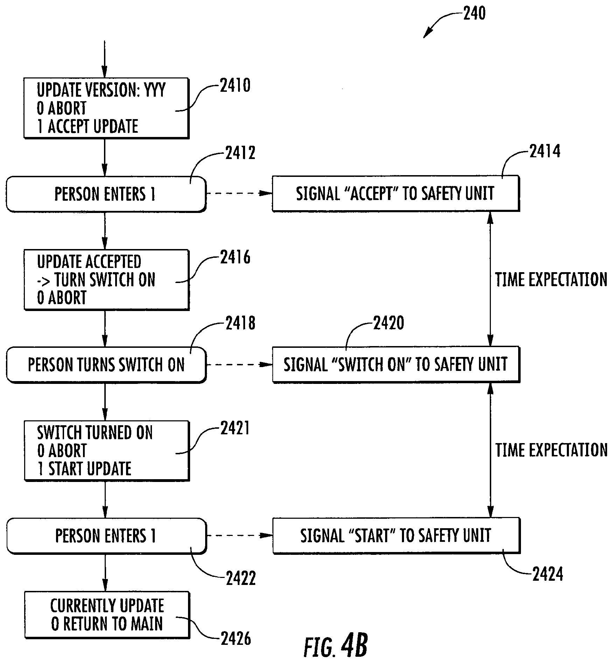

Figures 4A and 4B show in more detail the individual steps to be carried out in the course of exemplary interactive software update activation sequences according to step 240 in Figure 3. The sequence of steps is identical according to the procedures of Figures 4A and 4B, except for an additional step 2421 in Figure 4B. The service person connects a service tool including a display and an input tool to the control board 24. The activation procedure 240 may start with a main menu being displayed to the service person and asking whether a software update is to be carried out. In case the service person enters that a software update is to be carried out in step 2404, the control board 24 displays the current software version in step 2406 together with an inquiry whether to proceed ("1") or to abort the software activation procedure ("0"). In case the service person enters to proceed in step 2408, the update software version is displayed in step 2410 together with an inquiry whether to accept the update ("1") or whether to abort ("0"). In case the service person enters to proceed in step 2412, the control board 24 sends a signal "accept" to safety unit 60 (step 2414). After receipt to the signal "accept" in step 2414, the safety unit 60 waits for a predefined time window to receive in step 2420 a signal "switch on" indicating that the software update activation switch has been turned on in step 2418 (see arrow "time expectation" in Fig. 4A and 4B). In case the software update activation switch has not been turned on after lapse of a predetermined time, the software updated activation procedure is aborted.

In step 2416, the display shows to the service person that the software update is accepted and asks to start the software update procedure. Following this request, the service person has to operate (turn on) the software updated activation switch in step 2418. In case the software update activation switch is turned on in step 2418, a corresponding signal "switch on" is sent to safety unit 60 and received by safety unit in step 2420. Receipt of the "switch on" signal by safety unit 60 in step 2420 is decisive whether the time expectation is exceeded or not. After activating the software update activation switch in step 2418, the service person has to confirm that the update procedure is to be started by entering "1" in step 2422 which will trigger sending another signal "start" to safety unit 60. The time difference between the receipt of the "switch on" signal (step 2420) and receipt of the "start" signal (step 2424) at safety unit 60 is detected again and it is decided whether this time difference is within a further time expectation. If this is the case, the software activation procedure is started and carried out until completion (step 2426).

In addition, the safety unit 60 checks whether the total time difference between step 2414 (receipt of signal "accept") and step 2414 (receipt of signal "start") is within an expected time difference, and abort the software update activation process in case the expected time difference is exceeded.

In the procedure described above with respect to Figure 4A the service person has to know that first the software update activation switch is to be operated in step 2420, and then the software update procedure is to be started by an input in step 2422. Alternatively, this part of the procedure may be carried out interactively, as shown in Figure 4B. After operating the software activation switch in step 2420, the display asks in step 2421 to start the software activation procedure, followed by the corresponding input in step 2422.

Moreover, the software update activation may involve a check of the authentication of the service person, e.g. by requesting the service person to input a specific PIN or using biometric features. In that way, the requirement to operate a manual software update activation switch ensures the attendance of a service person, and in addition the safe state of the elevator system during the update procedure. The additional software update activation sequence prevents an unintended activation of the software update by the service person and further might ensure that only a specific software update package selected by the activation procedure, but actively confirmed by the service person, is indeed activated.

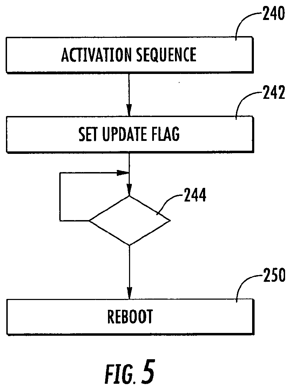

After step 240 has been completed with successful activation of an update procedure with respect to an updated version of safety-related software stored in the DownloadMemory, the elevator control system 50 is rebooted in step 250. Figure 5 indicates that the reboot procedure 250 is started only after an update flag is set in step 242 and the service person has confirmed that a reboot is to be carried out (step 244). Depending on the type of software update to be carried out, it may be required to reboot any of the control systems in the elevator system 10, i.e. the elevator control system 50 as a whole (including, e.g., safety unit 60, main control 70, drive control 80, door control 90), or it may be sufficient to reboot only the safety unit 60. During the reboot procedure, the elevator control system 50 will recognize that the software update activation switch has been operated (e.g. by checking the update flag, as shown in step 242 in Figure 5), and therefore will check in the DownloadMemory for any available and activated software update packages. Depending on the software update activation sequence, during the reboot the elevator control system 50 may consider any software update packages residing in the DownloadMemory as activated software packages, or it may check any software packages residing in the DownloadMemory for a further activation signature. In case the elevator control system 50 detects at least one activated software update package in the DownloadMemory, it will replace the corresponding software module in its active memory by executing that software update package (step 280) and execute the updated version of the software as derived from the software update package in the course of its further control (step 290).

Before actually copying the updated version of the safety-related software from the DownloadMemory to the active memory in step 280, the elevator control system 50 or the safety unit 60 may carry out additional steps to check the consistency of the software update package stored in the DownloadMemory (step 260) and to check the authenticity of the software update package stored in the DownloadMemory (step 270).

Checking consistency of the updated version of the safety-related software will be carried out before overwriting any existing version of the safety-related software in the active memory section of the elevator control system 50 and may involve comparing the software or software modules installed in the elevator control system 50 with header information in the software update package stored in the DownloadMemory, e.g. in order to check whether the software update package relates to a newer version of the same software or software module as already installed. As a further consistency check the software update package might include an encrypted version of the software to be updated. The software update package might be encrypted using a public key assigned to the particular software module of safety-related software installed in the elevator control system 50. Then, the elevator control system 50 may use its corresponding private key to decrypt the software update package. This makes sure that only an elevator system 50 having the correct private key corresponding to the public key used for encryption can decrypt the updated version of the safety related software and create an executable binary file.

Checking authenticity of the updated version of the safety-related software in the context of the activation procedure, before overwriting the existing version of the safety-related software in the active memory section elevator control system 50 may be carried out with the aid of a digital signature provided to the software update package using a private key of the author of the software update package. The digital signature can be verified by the elevator control system 50 using the public key of the author, thus making sure that the software update package to be installed has been written by the author and does not have been modified.

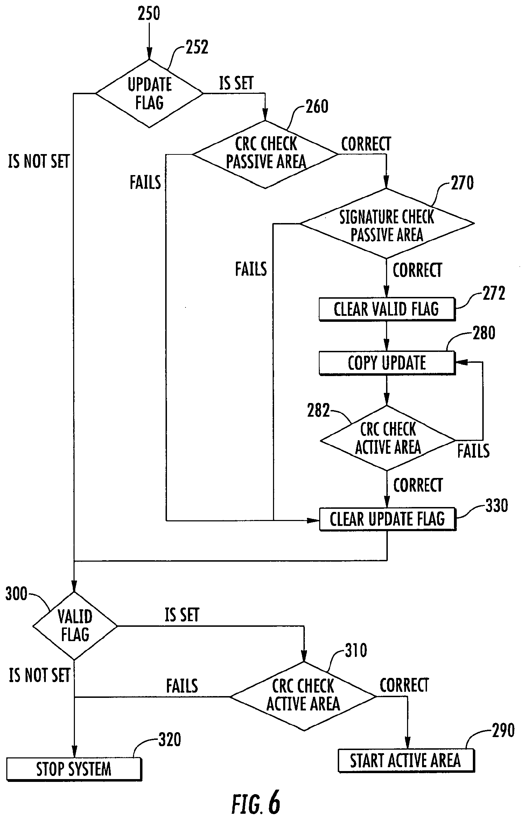

Figure 6 shows in more detail the procedures carried out following the reboot command in step 250, according to one embodiment. After the reboot command is issued in step 250, the status of the update flag is checked in step 252. In case the update flag 252 is not set (indicating that a "normal" reboot without any software update is to be carried out), the procedure advances to step 300 where the status of a valid flag is checked. The valid flag indicates whether the safety unit 60 is in a valid state. If the valid flag indicates that the safety unit is not in a valid state, the system is stopped immediately (step 320). If the valid flag indicates a valid state, the software residing in the active memory area of safety unit 60 is checked for integrity (by applying a CRC check) in step 310. In case this check fails, the system is stopped (step 320). Otherwise, the system is operated by starting carrying out the software residing in the active memory (step 290).

In case the software update flag is set in step 252, the procedure carries out the reboot procedure with a software update. In step 260 a consistency check of the newly downloaded software update is carried out by applying a CRC check to the passive memory area of safety unit 60, i.e. the memory area where the downloaded, but not yet installed, software package is stored. This check primarily checks whether the download was complete and successful. If the CRC check in step 260 fails, the update flag is cleared in step 330, and the reboot procedure continues without software update as described above. If the CRC check in step 260 is successful, the procedure continues with carrying out an authenticity check in step 270, e.g. by checking a digital signature applied to the downloaded software package. If the CRC check in step 270 fails, the update flag is again cleared in step 330, and the reboot procedure continues without software update as described above. If the check in step 270 is successful, the valid flag is cleared in step 272 indicating that the currently installed software version is considered no longer valid, and the downloaded software update package is copied from the passive memory area to the active memory area in step 280. In step 282 a further CRC check is applied to the newly copied software package in the active memory area to ensure that the copying procedure from the passive memory area to the active memory area was successful and complete. The copying procedure is repeated until the CRC check in step 280 is successful. Then, the software update flag is cleared in step 330, and the reboot procedure continues as descried above with the difference that the old software package has been replaced by the updated software package.

The embodiments described above allow a technician to update safety-related software in a people conveyor system, particularly in an elevator system, without having to replace hardware.

As suggested, updating safety-related software in a people conveyor system, particularly in an elevator system, may include providing an updated version of the safety-related software and storing the updated version of the safety-related software in a safety unit of the people conveyor system. Once stored, the updated version of the safety-related software may be activated by operating a software update activation switch permanently associated with the people conveyor system. In case of successful activation of the updated version of the safety-related software, further control of the operation of the people conveyor system will be based on the updated version of the safety-related software.

A safety unit or safety controller in the context of the embodiments described herein is an appliance or an apparatus that may include hardware and/or software. The safety unit receives input signals delivered by switching devices or sensor devices (also referred to as safety switches), and produces output signals therefrom by means of logic combinations and sometimes further signal or data processing steps. The output signals can then be supplied to actuators, which effect specific actions or reactions in the environment on the basis of the input signals.

A programmable safety unit or controller allows the user to individually define the logic combinations and possibly further signal or data processing steps according to his needs using software, what is known as the user program of the safety unit. Programmability allows a great deal of flexibility in comparison with earlier solutions, in which the logic combinations were produced by defined wiring between various safety devices. By way of example, a user program can be written using a commercially available personal computer (PC) and using appropriately set-up software programs.

A preferred area of application for a safety unit or safety controller of this kind is in the field of machine safety for monitoring unsafe situations where an emergency power cut-off is required, or where operation of a machine is to be stopped or prevented. In case of a people conveyor system, usually operation of the movable component that transports people is to be stopped or prevented when there is a risk that persons can be injured by movement of that movable component. E.g. in an elevator system, when one of the landing doors is opened, or when one of the car doors is not closed properly, or when the car has triggered a limit switch in the hoistway, a respective signal is produced which is supplied to the safety unit as an input signal. In response thereto, the safety unit prevents further movement of the car, e.g. by providing a signal, or using an actuator, to shut down the drive machine.

For example, as described in the introductory paragraphs of this disclosure, in people conveyor systems safety switches are located at various safety points, at which the state of safety-critical components (particularly, the position of movable components, such as, e.g., doors) must be monitored prior to the initiation of an action and, if necessary, during the course of this action. These safety switches may be connected in series to form a safety chain so that the action can only be started or continued when all the safety switches show a predetermined switching state. For example, in the case of an elevator system, it must be ensured that before the start and during the travel of the elevator car all doors (car doors as well as landing doors on each floor) remain closed and mechanically locked. Therefore, travel of an elevator car is in general not allowed unless all of the safety switches in a safety chain connecting respective safety switches monitoring the closing state of the doors are closed.

In an elevator system, the safety unit may have a configuration to monitor electrically a safety chain as used in elevators or other conveyors for ensuring that prior to the elevator car starting, and while the car is travelling, all the doors (car doors and landing doors) are closed and remain mechanically locked. The safety chain may be configured such as to use contactlessly actuatable switching devices, as described in US 5 487 448 and US 6 732 839, for example.

For further details on safety switches and safety chains, reference is made to the introductory part of this specification.

In contrast to a "normal" controller, a safety unit normally is required to always ensure a safe state of the installation or machine presenting the hazard even if a malfunction occurs in it or in a device connected to it. High demands are therefore normally made of safety units in terms of their own failsafety, which results in considerable complexity for development, manufacture, and maintenance of safety units. Often, safety units require particular approval by competent supervisory authorities, such as by the TUV in Germany, before they are used. In particular embodiments the safety unit may be required to observe prescribed safety standards as set down, by way of example, in International Standard IEC 61508, parts 1 to 3. In the elevator field, an electric safety unit usually is required to fulfil specific standards, as set out European Standard EN 81-20 (2014), for example. In the context of particular embodiments for carrying out software updates, a safety unit may be understood to mean a device or an arrangement which at least complies with section 5.11.2, in particular subsection 5.11.2.6, of EN 81-20 (2014).

Following the suggestion described herein, the updated version of the safety-related software may be stored in the safety unit in an automated way. However, the stored updated version of the safety-related software will not yet be active once stored, even in case the updated version of the safety-related software includes executable code intended to replace existing code. Although such executable update code will, in principle, be useable by the controller of the safety unit or the people conveyor system to carry out the respective control procedures in the people conveyor system, it is suggested that the executable update code remains inactive during initial stages after the update code has been stored in the safety unit.

The update code, whether including executable code or not, will remain inactive until an activation of the update code has taken place. Activation requires presence of a person at the people conveyor site, in order to bring the people conveyor into a safe state and to make sure that the update code has been stored completely and correctly, and is installed completely and correctly. This is achieved by the requirement that activation of updated version of safety-related software requires operation of a software update activation switch permanently or fixedly associated to people conveyor system. Being permanently or fixedly associated with the conveyor system implies that the software update activation switch cannot be removed from the conveyor system by simple means, in particular is not removable without causing some form of damage or irreversible change to the people conveyor system. Usually, the people conveyor system cannot be put into operation after the software update activation switch has been removed or has been manipulated in some way.

Presence of a person during the authentication procedure ensures that a person - usually a service person - is able to monitor the software update process properly. However, it is not required that the service person is present at each and every location, where an updated version of the safety-related software is required. Rather, the software update can be provided in respective software update modules, and each software update module can be stored in the safety unit at the respective locations where it is needed. For purpose of activation, the service person can operate in a safe environment, since it is not required to replace hardware, but rather the service person only needs to operate the software update activation switch.

Thereby, lower costs are incurred, as new hardware is not required. The update procedure may be easy and fast, thereby affording a higher availability of the people conveyor. Various checks and control procedures can be applied to the updated version of the safety-related software before activation is completed. Thereby, a secure and safe update process can be assured.

Particular embodiments may include any of the following optional features, alone or in combination:
As described above, the updated version of the safety-related software may be stored in the safety unit as a file including executable code. Executable code (also referred to as executable file or executable program) is meant to be code that causes a suitable computer or a microprocessor to perform indicated tasks according to encoded instructions, as opposed to data (date file) that must be parsed by a program to be meaningful to the computer or microprocessor. Executable code refers to a completely functional program that can be executed without any installer. Executable code primarily comprises machine code instructions to be executed by a physical processor. However, in some embodiments, in a more general sense, a file containing instructions (such as byte code) for a software interpreter may also be considered executable. Even a scripting language source file may therefore be considered executable in this sense. The term executable code is used to describe sequences of executable instructions that do not necessarily constitute a whole executable file. For example, executable code may refer to sections within a program.

A typical example for non-executable code would be source code including instructions that need to be compiled before they can be executed by a processor. Once compiled, the source code is no longer present, but has been transformed into a set of instructions that can be executed by a microprocessor.

In the context of downloading software, a completely functional program without any installer (which would be executable code as used herein) is also often called a program binary, or binaries (as opposed to the source code).

The updated version of the safety-related software may be provided to the safety unit by any means. Often, downloading such software from the author to the safety unit via a data network will be the method of choice. The download may either be initiated by a server on the author side (similar to a data transfer of the "push" type), or may be initiated on the side of the safety unit (i.e. the safety unit is programmed to check for available software at an update server or the like). Besides any forms of software download from a server, any other forms of more conventional form of data transfer may be used as well, e.g. provision of the updated software version "manually" via mobile data processing devices or via suitable data carriers.

Particularly, the updated version of the safety-related software may be stored in a first memory section of the safety unit, the first memory section being an inactive memory section. Inactive memory section as used in this context is intended to refer to a memory, or a section of memory, that is not involved actively in any control procedures carried out by the safety unit in the context of controlling elevator operation. Data stored in such inactive memory section do not influence control of the people conveyor system, particularly do not affect any safety features, even in case that code includes executable program code that could be executed directly by a microprocessor.

In case of successful activation of the updated version of the safety-related software, an existing version of the safety-related software residing in a second, active memory section of the safety unit may be overwritten by the updated version of that safety-related software. The second memory section will be an active memory section of the safety unit in the sense that any executable code stored in the second memory section will influence the control of safety-related functions of the people conveyor system during operation. Usually, executable program code (binary code) will be stored in the second memory section and will be executed to control safety-related functions of the people conveyor. In case non-binary code is stored in the second memory section, such non-binary code might be converted into executable code (binary) before start of a control procedure (e.g. in the course of a booting procedure or rebooting procedure) or while the control procedure is executed.

In particular embodiments, the operating of the software update activation switch may include operating a switch fixedly attached to a control board permanently assigned to the people conveyor system. Thereby, the activation procedure cannot be carried out successfully from any remote location. Rather, while the download or storing of an updated version of safety-related software to the safety unit may be achieved in a fully, or at least widely, automated way, attendance of a person, usually a service person, at the site of the people conveyor is required in order to activate the updated version of the safety-related software. There is no possibility for completing activation automatically (i.e. without interaction with a person operation the activation switch), nor is it possible that the person operates the software update activation switch remotely.

While it may be possible to require an authorization for persons, such that these persons are allowed to operate the software update activation switch, this is not a particular requirement. In a lot of cases, no authorization will be required, so that, in principle, anybody could operate the software update activation switch. In order to avoid abusive operation of the software update activation switch, usually the software update activation switch will be provided in such a way as to be accessible only to persons familiar with operation of the people conveyor, in particular with its safety procedures. For example, the software update activation switch may be included in a control board, as it is usually provided in a people conveyor system. In one example, such control board may be provided for allowing an emergency electrical operation of the elevator car, as required in most elevator safety codes (e.g. section 5.12.1.6 of EN 81-20(2014)). For example, the operating of the software update activation switch may include operating at least one switch included in such control board. In the most simple form, a conventional control board may also include the possibility to activate updates of safety-related software by operating one, or a combination of, the switches provided in the control board.

In particular embodiments, the software update activation switch may have a configuration to be manually operated by a person. In a most simple form, such manually operated switch may have the configuration of a mechanical switch. This ensures that a person will be in attendance for activating the updated version of the safety-related software, since a manually operated switch cannot be operated remotely.

In order to avoid abuse, the software update activation switch may not be freely accessible to anybody, but may be provided in such a way that a key is required to access the software update activation switch. For example, in most people conveyor systems, a particular key (often a triangular key) is required to access an emergency electrical operation control board. The same key may be used for accessing the software update activation switch. Such key not necessarily needs to be assigned to a specific person, but may be given to any person fulfilling certain requirements (e.g. to any person wishing to carry out maintenance to a particular people conveyor system).

In order to prevent unintended activation of the software update, activating the updated version of the safety-related software further may include carrying out a predefined activation operation protocol. Such activation operation protocol may be initiated by operating the software update activation switch. For example, the activation operation protocol may include operating a specific number of switches on a software activation control board in a predefined sequence. Alternatively, or in addition, the activation operation protocol may be interactive and thus require some form of a dialog between the person and the safety unit. One way of realizing an interactive activation operation protocol would be by way of requiring the person to connect a mobile terminal to the safety unit and answer specific questions. Providing an interactive activation operation protocol further allows the possibility that the person checks the software updates available at the safety unit and confirms that a specific software is meant to be activated before the activation is completed.

The updated software version may be downloaded from a source computer via a data network, particularly a public data network like the internet.

In particular embodiments, the updated version of the safety-related software may be provided and stored in the safety unit as an encrypted file. In addition, or alternatively, the updated version of the safety-related software may include a digital signature. While such measures are particularly useful when downloading the updated version of the safety-related software via a public data network, they are also useful for more conventional forms of data transfer. Particularly, these measures allow for checking authenticity of the updated version of the safety-related software in the context of the activation procedure, before overwriting the existing version of the safety-related software in the second (active) memory section of the safety unit of the people conveyor system. For example, the checking of the authenticity of the updated software version may be carried out after the operation of the software update activation switch. Further, checking authenticity may be carried out with the aid of a digital signature provided to the updated version of the safety-related software using a private key of the author of the software update. The digital signature can be verified by the recipient, i.e. the safety unit of the people conveyor system, using the public key of the author, thus making sure that the software update has been written by the author and does not have been modified.

Activating the updated version of the safety-related software further may include checking consistency of the updated version of the safety-related software. Also, such checking of consistency will be carried out before overwriting the existing version of the safety-related software in the second (active) memory section of the safety unit of the people conveyor system. Consistency may be checked by comparing the software or software modules installed in the safety unit with the software update, and checking whether the software update relates to a newer version of the same software or software module installed in the safety unit. A further consistency check might be conceivable using an encrypted updated version of the safety-related software, e.g. each module of safety-related software installed in the safety unit may be associated with a respective private key. Then, in case one of these software modules is to be updated, the updated version of the software module may be encrypted by the author using the corresponding public key of that software module. The safety unit may decrypt the encrypted updated software version using the private key of that software module. This makes sure that only a safety unit having the correct private key corresponding to the public key used for encryption can decrypt the updated version of the software module in order to create an executable binary file.

The checking of the consistency of the updated version of the safety-related software may be carried out before the checking of the authenticity of the updated version of the safety-related software.

The embodiments disclosed herein also relate to a people conveyor system, particularly an elevator system, comprising a controller for controlling operation of the people conveyor system, the controller including at least one safety unit configured to control safety-related functions of the people conveyor system, the safety unit configured to carry out the method of updating safety-related software as described above. The people conveyor system particularly may include at least one movable component for conveying persons between different landings, and the controller may control operation of that movable component. In case of an elevator system, the movable component will comprise at least one elevator car movable between different landings located at different floors in a building, usually along a hoistway.

Moreover, the embodiments disclosed herein relate to a system comprising at least one software update server and at least one people conveyor system as described before. The software server will be configured to provide an update of safety-related software for the people conveyor system, e.g. in the form of a server in a maintenance center of the supplier of the people conveyor system. The people conveyor system will be configured to receive the update of safety-related software from the software update server via a data network and carry out the update procedures described herein in based on the updated software version stored in the safety unit.

While the invention has been described by taking reference to specific exemplary embodiments, it is to be understood that the invention is not limited to these embodiments and is defined by the scope of the appended claims.

List of reference signs:
10: Elevator system
12: Elevator car
14: Counterweight
16: Tension member
18: Hoistway
18a: front sidewall
18b: left sidewall
18c: right sidewall
18d: rear sidewall
20: Landing door
22: Lowest landing
24: control board
26: Front door of control board
28: Key lock of control board
50: Elevator control system
60: Safety unit
70: Main controller
72: Power relay for main controller
80: Drive controller
82: Power relay for drive controller
90: Door controller
92: Power relay for door controller
100: Server system of manufacturer
120: Data network
150: System including elevator control system in communication with server system
200: Method for updating safety-related software
210: Create safety code
220: Sign safety code update
230: Copy from network to DownloadMemory
240: Activate download with ensured attendance of service person
250: Reboot
260: Consistency check
270: Authentication check
280: Copy DownloadMemory to ExecutableMemory
290: Execute

## Claims

1. A method (200) of updating safety-related software in a people conveyor system, particularly in an elevator system (10), wherein the method includes carrying out a predefined interactive activation operation protocol comprising the steps of:
- providing an updated version of the safety-related software (210);
- storing (230) the updated version of the safety-related software in a first memory section of a safety unit (60) of the people conveyor system, the first memory section being an inactive memory section that is not used for executing control of elevator operations;
- connecting a service tool including a display and an input tool to the people conveyor system;
- displaying an inquiry whether to accept the update on the display and inquiring an input indicating whether to proceed or to abort the software activation procedure,
- sending a signal "accept" to the safety unit (60) if an input indicating to proceed has been entered via the input tool;
- after the signal "accept" has been received by the safety unit (60), waiting for a predetermined period of time to receive a signal "switch on" indicating that a software update activation switch permanently associated with the people conveyor system has been operated;
- in case the signal "switch on" is received within the predetermined period of time, waiting for a confirmation indicating that the software activation procedure is to be started to be entered via the input tool within a predetermined time expectation;
- in case the confirmation has been entered within the predetermined time expectation, activating (240) the updated version of the safety-related software; and
- in case of successful activation of the updated version of the safety-related software, overwriting an existing version of the safety-related software in a second, active memory section of the safety unit (280) and controlling the operation of the people conveyor system based on the updated version of the safety-related software (290).

2. The method (200) according to claim 1, wherein the updated version of the safety-related software is stored in the safety unit (60) as a file including executable code.

3. The method (200) according to any of claims 1 or 2, wherein the step of operating of the software update activation switch includes operating a switch fixedly attached to a control board (24) permanently assigned to the people conveyor system.

4. The method (200) according to claim 3, wherein the software update activation switch comprises an emergency electrical operation activation switch.

5. The method (200) according to any of claims 1 to 4, wherein the software update activation switch is to be manually operated by a person.

6. The method (200) according to any of claims 1 to 5, wherein the software update activation switch is accessible by using a key (28), particularly using an emergency electrical operation key.

7. The method (200) according to any of claims 1 to 6, wherein the updated version of the safety-related software is downloaded from a source computer (100) via a data network (120), particularly via a public data network.

8. The method (200) according to any of claims 1 to 7, wherein the updated version of the safety-related software is stored as an encrypted file and/or includes a digital signature.

9. The method (200) according to any of claims 1 to 8, wherein activating the updated version of the safety-related software further includes checking authenticity of the updated version of the safety-related software (270) and/or checking consistency of the updated version of the safety-related software (260).

10. A people conveyor system, particularly an elevator system (10), comprising a controller (50) for controlling operation of the people conveyor system, the controller (50) including at least one safety unit (60) configured to control safety-related functions of the people conveyor system, the safety unit (60) configured to carry out the method (200) of updating safety-related software according to any of claims 1 to 9.

11. A system (150) comprising at least one software update server (100) and at least one people conveyor system (10) according to claim 10, the software server (100) configured to provide a safety-related software update for the people conveyor system (10), the people conveyor system (10) configured to receive the safety-related software update from the software update server (100) via a data network (120).

## Patentansprüche

1. Verfahren (200) zum Aktualisieren von sicherheitsbezogener Software in einem Personenbeförderungssystem, insbesondere in einem Aufzugssystem (10), wobei das Verfahren Durchführen eines vordefinierten interaktiven Aktivierungsbetriebsprotokolls beinhaltet, das die folgenden Schritte umfasst:
- Bereitstellen einer aktualisierten Version der sicherheitsbezogenen Software (210);
- Speichern (230) der aktualisierten Version der sicherheitsbezogenen Software in einem ersten Speicherabschnitt einer Sicherheitseinheit (60) des Personenbeförderungssystems, wobei der erste Speicherabschnitt ein inaktiver Speicherabschnitt ist, der nicht für die Ausführung der Steuerung von Aufzugsbetrieben verwendet wird;
- Verbinden eines Servicewerkzeugs, das eine Anzeige und ein Eingabewerkzeug beinhaltet, mit dem Personenbeförderungssystem;
- Anzeigen einer Abfrage, ob die Aktualisierung auf der Anzeige akzeptiert werden soll, und Abfragen einer Eingabe, die angibt, ob die Softwareaktivierungsprozedur fortgesetzt oder abgebrochen werden soll,
- Senden eines Signals "Akzeptieren" an die Sicherheitseinheit (60), wenn über das Eingabewerkzeug eine Eingabe erfolgt ist, die das Fortsetzen anzeigt;
- nachdem das Signal "Akzeptieren" von der Sicherheitseinheit (60) empfangen wurde, Warten für eine vorbestimmte Zeitdauer, um ein Signal "Einschalten" zu empfangen, das anzeigt, dass ein dem Personenbeförderungssystem permanent zugeordneter Aktivierungsschalter für Softwareaktualisierungen betätigt wurde;
- falls das Signal "Einschalten" innerhalb der vorbestimmten Zeitspanne empfangen wird, Warten auf eine Bestätigung, die anzeigt, dass die Softwareaktivierungsprozedur gestartet werden soll, um über das Eingabewerkzeug innerhalb einer vorbestimmten Zeiterwartung einzugeben;
- falls die Bestätigung innerhalb der vorbestimmten Zeiterwartung eingegeben wurde, Aktivieren (240) der aktualisierten Version der sicherheitsbezogenen Software; und
- bei erfolgreicher Aktivierung der aktualisierten Version der sicherheitsbezogenen Software, Überschreiben einer bestehenden Version der sicherheitsbezogenen Software in einem zweiten, aktiven Speicherabschnitt der Sicherheitseinheit (280) und Steuern des Betriebs des Personenbeförderungssystems basierend auf der aktualisierten Version der sicherheitsbezogenen Software (290).

2. Verfahren (200) nach Anspruch 1, wobei die aktualisierte Version der sicherheitsbezogenen Software in der Sicherheitseinheit (60) als Datei mit ausführbarem Code gespeichert wird.

3. Verfahren (200) nach einem der Ansprüche 1 oder 2, wobei der Schritt des Betreibens des Aktivierungsschalters für Softwareaktualisierung Betreiben eines Schalters beinhaltet, der fest an einer Steuerplatine (24) angebracht ist, die dem Personenbeförderungssystem permanent zugeordnet ist.

4. Verfahren (200) nach Anspruch 3, wobei der Aktivierungsschalter für Softwareaktualisierung einen elektrischen Notbetrieb-Aktivierungsschalter umfasst.

5. Verfahren (200) nach einem der Ansprüche 1 bis 4, wobei der Aktivierungsschalter für Softwareaktualisierung von einer Person manuell zu betreiben ist.

6. Verfahren (200) nach einem der Ansprüche 1 bis 5, wobei der Aktivierungsschalter für Softwareaktualisierung unter Verwendung eines Schlüssels (28), insbesondere unter Verwendung eines elektrischen Notbetriebsschlüssels, zugänglich ist.

7. Verfahren (200) nach einem der Ansprüche 1 bis 6, wobei die aktualisierte Version der sicherheitsbezogenen Software von einem Quellrechner (100) über ein Datennetzwerk (120), insbesondere über ein öffentliches Datennetzwerk, heruntergeladen wird.

8. Verfahren (200) nach einem der Ansprüche 1 bis 7, wobei die aktualisierte Version der sicherheitsbezogenen Software als verschlüsselte Datei gespeichert wird und/oder eine digitale Signatur beinhaltet.

9. Verfahren (200) nach einem der Ansprüche 1 bis 8, wobei das Aktivieren der aktualisierten Version der sicherheitsbezogenen Software ferner Prüfen der Authentizität der aktualisierten Version der sicherheitsbezogenen Software (270) und/oder Prüfen der Konsistenz der aktualisierten Version der sicherheitsbezogenen Software (260) beinhaltet.

10. Personenbeförderungssystem, insbesondere Aufzugssystem (10), umfassend eine Steuerung (50) zum Steuern des Betriebs des Personenbeförderungssystems, wobei die Steuerung (50) mindestens eine Sicherheitseinheit (60) beinhaltet, die konfiguriert ist, um sicherheitsbezogene Funktionen des Personenbeförderungssystems zu steuern, wobei die Sicherheitseinheit (60) konfiguriert ist, um das Verfahren (200) zum Aktualisieren von sicherheitsbezogener Software nach einem der Ansprüche 1 bis 9 durchzuführen.

11. System (150), umfassend mindestens einen Softwareaktualisierungsserver (100) und mindestens ein Personenbeförderungssystem (10) nach Anspruch 10, wobei der Softwareserver (100) konfiguriert ist, um eine sicherheitsbezogenes Softwareaktualisierung für das Personenbeförderungssystem (10) bereitzustellen, wobei das Personenbeförderungssystem (10) konfiguriert ist, um die sicherheitsbezogene Softwareaktualisierung von dem Softwareaktualisierungsserver (100) über ein Datennetzwerk (120) zu empfangen.

## Revendications

1. Procédé (200) de mise à jour d'un logiciel lié à la sécurité dans un système de transport de personnes, en particulier dans un système d'ascenseur (10), dans lequel le procédé comprend la réalisation d'un protocole d'opération d'activation interactive prédéfini comprenant les étapes de :
- fourniture d'une version mise à jour du logiciel lié à la sécurité (210) ;
- stockage (230) de la version mise à jour du logiciel lié à la sécurité dans une première section de mémoire d'une unité de sécurité (60) du système de transport de personnes, la première section de mémoire étant une section de mémoire inactive qui n'est pas utilisée pour exécuter la commande des opérations d'ascenseur ;
- connexion d'un outil de service comprenant un affichage et un outil d'entrée dans le système de transport de personnes ;
- affichage d'une demande d'acceptation de la mise à jour sur l'affichage et de demande d'une entrée indiquant s'il faut poursuivre ou abandonner la procédure d'activation du logiciel,
- envoi d'un signal « accepter » à l'unité de sécurité (60) si une entrée indiquant de continuer a été entrée via l'outil d'entrée ;
- après que le signal « accepter » a été reçu par l'unité de sécurité (60), attente d'une période de temps prédéterminée pour recevoir un signal « allumer » indiquant qu'un interrupteur d'activation de mise à jour de logiciel associé en permanence au système de transport de personnes a été actionné ;
- dans le cas où le signal « allumer » est reçu dans la période de temps prédéterminée, attente d'une confirmation indiquant que la procédure d'activation de logiciel doit être lancée pour être saisie via l'outil d'entrée dans une attente de temps prédéterminée ;
- dans le cas où la confirmation a été entrée dans l'attente de temps prédéterminée, activation (240) de la version mise à jour du logiciel lié à la sécurité ; et
- en cas d'activation réussie de la version mise à jour du logiciel lié à la sécurité, écrasement d'une version existante du logiciel lié à la sécurité dans une seconde section de mémoire active de l'unité de sécurité (280) et commande du fonctionnement du système de transport de personnes sur la base sur la version mise à jour du logiciel lié à la sécurité (290).

2. Procédé (200) selon la revendication 1, dans lequel la version mise à jour du logiciel lié à la sécurité est stockée dans l'unité de sécurité (60) sous la forme d'un fichier comprenant un code exécutable.

3. Procédé (200) selon l'une quelconque des revendications 1 ou 2, dans lequel l'étape de fonctionnement du commutateur d'activation de mise à jour de logiciel comprend le fonctionnement d'un commutateur fixé de manière permanente à un tableau de commande (24) affecté en permanence au système de transport de personnes.

4. Procédé (200) selon la revendication 3, dans lequel le commutateur d'activation de mise à jour de logiciel comprend un commutateur d'activation de fonctionnement électrique d'urgence.

5. Procédé (200) selon l'une quelconque des revendications 1 à 4, dans lequel le commutateur d'activation de mise à jour de logiciel doit être actionné manuellement par une personne.

6. Procédé (200) selon l'une quelconque des revendications 1 à 5, dans lequel le commutateur d'activation de mise à jour de logiciel est accessible à l'aide d'une clé (28), notamment à l'aide d'une clé de fonctionnement électrique d'urgence.

7. Procédé (200) selon l'une quelconque des revendications 1 à 6, dans lequel la version mise à jour du logiciel lié à la sécurité est téléchargée depuis un ordinateur source (100) via un réseau de données (120), notamment via un réseau de données public.

8. Procédé (200) selon l'une quelconque des revendications 1 à 7, dans lequel la version mise à jour du logiciel lié à la sécurité est stockée sous la forme d'un fichier crypté et/ou comprend une signature numérique.

9. Procédé (200) selon l'une quelconque des revendications 1 à 8, dans lequel l'activation de la version mise à jour du logiciel lié à la sécurité comprend en outre la vérification de l'authenticité de la version mise à jour du logiciel lié à la sécurité (270) et/ou la vérification de la cohérence de la version mise à jour du logiciel lié à la sécurité (260).

10. Système de transport de personnes, en particulier un système d'ascenseur (10), comprenant un dispositif de commande (50) pour commander le fonctionnement du système de transport de personnes, le dispositif de commande (50) comprenant au moins une unité de sécurité (60) configurée pour commander des fonctions liées à la sécurité du système de transport de personnes, l'unité de sécurité (60) étant configurée pour exécuter le procédé (200) de mise à jour d'un logiciel lié à la sécurité selon l'une quelconque des revendications 1 à 9.

11. Système (150) comprenant au moins un serveur de mise à jour de logiciel (100) et au moins un système de transport de personnes (10) selon la revendication 10, le serveur de logiciel (100) étant configuré pour fournir une mise à jour de logiciel lié à la sécurité pour le système de transport de personnes (10), le système de transport de personnes (10) étant configuré pour recevoir la mise à jour de logiciel lié à la sécurité depuis le serveur de mise à jour de logiciel (100) via un réseau de données (120).
